# EUROPEAN PATENT APPLICATION

(11) **EP 4 266 537 A2**
(43) Date of publication of application: **25.10.2023**
(21) Application number: 23168748.4
(22) Date of filing: 19.04.2023
(51) Int. Cl.: H02J 7/00, A01D 34/00

(54) **ROBOTIC TOOL AND CHARGING STATION**

(30) Priority: 22.04.2022 US 202263333865 P
(71) Applicant: Techtronic Cordless GP, Anderson, SC 29621 (US)
(72) Inventor: LAI, Hok Sum Sam, Kwai Chung (HK); CHOI, Man Ho, Kwai Chung (HK); NG, Ho Lam, Kwai Chung (HK); LI, Shing Hin, Kwai Chung (HK)
(74) Representative: Zimmermann & Partner Patentanwälte mbB

(57) **Abstract**

A charging station for use with a robotic garden tool having a charging port, the charging station including a pad having a top surface, a hub extending from the top surface to produce a distal end, a charging terminal configured to form a temporary electrical connection with the charging port of the robotic garden tool, where the charging terminal is adjustable relative to the pad.

## Description

### CROSS-REFERENCE TO RELATED APPLICATION

This application claims priority to prior-filed, co-pending U.S. Provisional Patent Application No. 63/333,865 filed on April 22, 2022, the entire contents of which is incorporated herein by reference.

### FIELD OF THE INVENTION

The embodiments described herein related to a robotic garden tool, and more specifically to a charging station for use with the robotic garden tool.

### BACKGROUND OF THE INVENTION

Robot tools are typically used with some form of charging station to allow the tool to recharge any internal batteries from time to time.

### SUMMARY

In one aspect, a charging station for use with a robotic garden tool having a charging port, the charging station including a pad having a top surface, a hub extending from the top surface to produce a distal end, a charging terminal configured to form a temporary electrical connection with the charging port of the robotic garden tool, and where the charging terminal is adjustable relative to the pad.

Alternatively or additionally, in any combination, where the charging terminal defines a docking axis, where the charging terminal is configured to engage the charging port in a direction parallel to the docking axis, and where the docking axis is adjustable relative to the pad.

Alternatively or additionally, in any combination, where the hub defines a hub axis, and where the docking axis extends radially from the hub axis.

Alternatively or additionally, in any combination, where the hub axis is normal to the top surface.

Alternatively or additionally, in any combination, where the top surface of the pad includes an alignment mechanism configured to align the robotic power tool relative to the charging terminal.

Alternatively or additionally, in any combination, where the alignment mechanism includes a pair of tracks formed into the top surface of the pad.

Alternatively or additionally, in any combination, where the charging terminal is a first charging terminal, the charging station further comprising a second charging terminal configured to form a temporary electrical connection with the robotic garden tool.

Alternatively or additionally, in any combination, where the first charging terminal and the second charging terminal are both independently adjustable relative to the pad.

Alternatively or additionally, in any combination, where the charging terminal maintains a constant distance from the top surface of the pad when being adjusted relative thereto.

In another aspect, a method of setting-up a charging station for use with a robotic garden tool having a docking port, where the charging station includes a pad, a hub extending from the pad, and a charging terminal adjustably mounted to the hub, where the charging terminal defines a docking axis, the method including coupling a first boundary wire portion to the pad to define a first boundary axis, coupling a second boundary wire portion to the pad to define a second boundary axis, adjusting the charging terminal relative to the pad to align the docking axis with one of the first boundary axis and the second boundary axis.

Alternatively or additionally, in any combination, where the hub defines a hub axis, and where the charging axis extends radially from the hub axis.

Alternatively or additionally, in any combination, where adjusting the charging terminal includes adjusting the charging terminal so that the charging terminal maintains a constant distance from the pad.

Alternatively or additionally, in any combination, where the pad includes an alignment mechanism defining an alignment axis, the method further comprising adjusting the pad to align the alignment axis with the docking axis.

Alternatively or additionally, in any combination, where the alignment mechanism includes a pair of parallel tracks formed into the pad.

Alternatively or additionally, in any combination, where the pad includes a plurality of channels formed therein, and where coupling the first boundary wire portion to the pad includes positioning at least a portion of the first boundary wire portion in a corresponding channel.

Alternatively or additionally, in any combination, further comprising docking the robotic garden tool to the charging terminal.

Alternatively or additionally, in any combination, where docking the robotic garden tool includes introducing the charging terminal to the charging port along the docking axis.

In still another aspect, a charging station for use with a robotic garden tool having a charging port, the charging station including a pad having a top surface having an alignment mechanism thereon, where the alignment mechanism defines an alignment axis, the pad also defining a plurality of channels, each sized to receive at least a portion of a barrier wire therein, a hub extending from the top surface to produce a distal end, a charging terminal configured to form a temporary electrical connection with the charging port of the robotic garden tool, where the charging terminal defines a docking axis, where the top surface of the pad is adjustable relative to the charging terminal to align the alignment axis with the docking axis.

Alternatively or additionally, in any combination, the alignment axis is adjustable relative to the channels.

Alternatively or additionally, in any combination, where the charging terminal is adjustable relative to the channels.

### BRIEF DESCRIPTION OF THE DRAWINGS

FIG. 1 is a plan view of a robotic garden tool positioned within a cutting area encompassed by a barrier and multiple charging stations.
FIG. 2 is a side view of the garden tool and charging station of FIG. 1.
FIG. 3 is a top view of the garden tool and charging station of FIG. 1.
FIG. 4 is a top view of a charging station.
FIG. 5 is a bottom view of the charging station of FIG. 4.
FIG. 6 is a side view of the charging station of FIG. 4.
FIG. 7 is a top view of the charging station of FIG. 4 with the charging terminal in a first orientation.
FIG. 8 is a top view of the charging station of FIG. 7, with the charging terminal adjusted to a second orientation.
FIG. 9 is another embodiment of a charging station with the charging terminal in a first orientation.
FIG. 10 is the charging station of FIG. 9 with the charging terminal adjusted to a second orientation.
FIG. 11 is another embodiment of a charging station with the pad in a first orientation.
FIG. 12 is the charging station of FIG. 11 with the pad adjusted to a second orientation.
FIGS. 13-15 illustrate another embodiment of a charging station.

### DETAILED DESCRIPTION

Before any embodiments of the invention are explained in detail, it is to be understood that the invention is not limited in its application to the details of construction and the arrangement of components set forth in the following description or illustrated in the following drawings. The invention is capable of other embodiments and of being practiced or of being carried out in various ways. Also, it is to be understood that the phraseology and terminology used herein is for the purpose of description and should not be regarded as limiting.

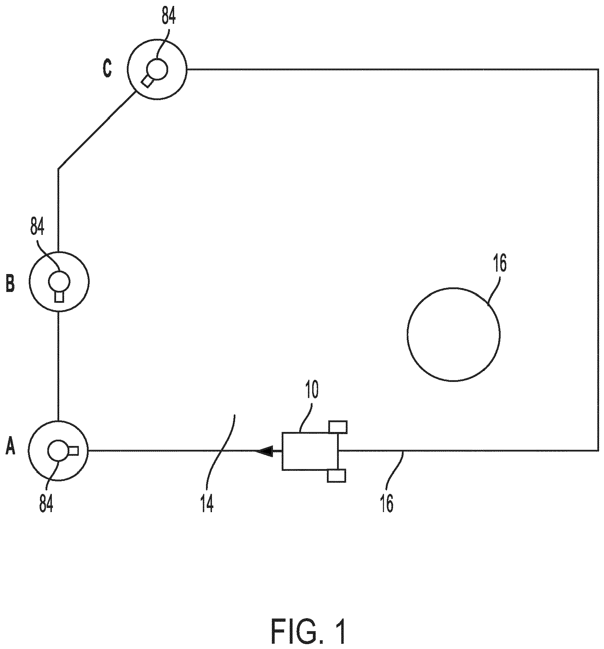

Figures 1-3 illustrate a robotic garden tool 10. More specifically, the garden tool 10 includes a robotic lawn mower for use to cut vegetation such as grass in an enclosed cutting area 14. The cutting area 14 generally includes, but is not limited to, a continuous area of grass or other vegetation that is enclosed by one or more barriers 16. In the illustrated embodiment, the barriers 16 include a series of electrified wires enclosing the cutting area 14 while in alternative embodiments different form of barrier may be used such as, but not limited to, walls, pavers, GPS data points, and the like. As shown in FIG. 1, such barriers 16 may be used to enclose the overall cutting area 14 and/or to segregate one or more interior regions from the cutting area 14. While the illustrated tool 10 is a robotic mower, it is understood that in alternative embodiments other forms of robotic tool may be used including, but not limited to, a robotic trimmer, a robotic sprinkler, a robotic fertilizer spreader, and the like.

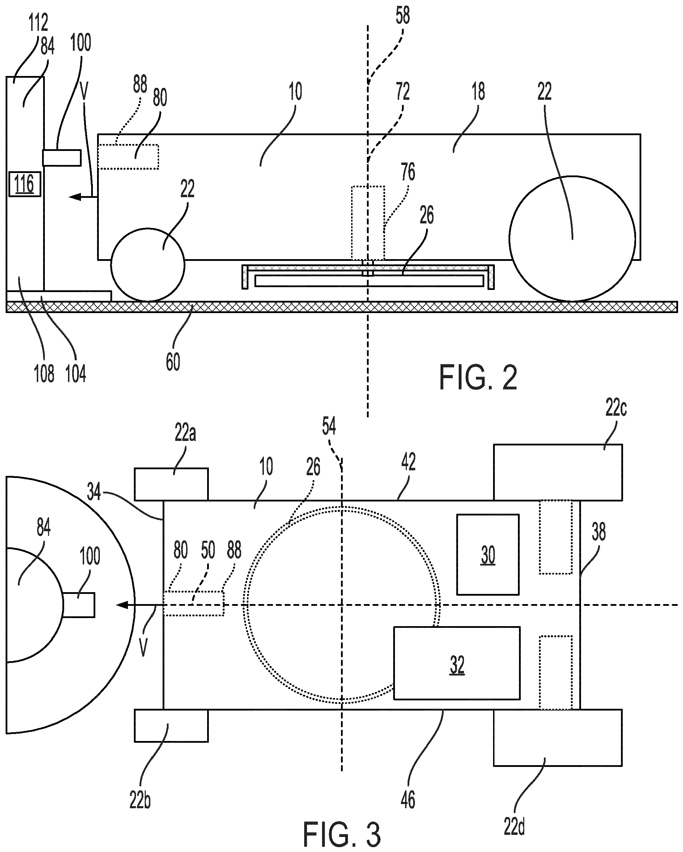

As shown in FIGS. 2 and 3, the tool 10 is an electrically powered, self-propelled device that includes a body 16, a plurality of wheels 22 rotatably mounted to the body 18, a working tool 26 mounted to the body 18, a controller 30, a battery 32, and a charging port 80. The body 18, in turn, includes a front or first end 34, rear or second end 38 opposite the first end 34, a right or first side 42, and a left or second side 46 opposite the first side 42. The body 18 also defines a longitudinal axis 50 extending along the length of the body 18 and centered between the first side 42 and the second side 46 (e.g., passing through both the first and second ends 34, 38). The body 18 also defines a lateral axis 54 extending along the width of the body 18 and centered between the first and second ends 34, 38 (e.g., passing through both the first and second sides 42, 46). The body 18 also defines a central axis 58 generally positioned at the intersection of the longitudinal and lateral axes 50, 54 and oriented perpendicular to both (e.g., in a generally vertical orientation).

As shown in FIG. 3, the tool 10 includes four wheels 22a, 22b, 22c, 22d, each rotatably coupled to the body 18 and configured to support the tool 10 for self-driven movement along a support surface 60 (e.g., the surface of the cutting area 14). In the illustrated embodiment, the wheels 22a, 22b, 22c, 22d include two steerable, undriven wheels 22a, 22b and two non-steerable, driven wheels 22c, 22d. However, in alternative embodiments, all or any sub-set of the wheels 22 may be driven and all or any sub-set of the wheels 22 may be steerable. Furthermore, while the illustrated steerable wheels are passive in nature (e.g., a caster-style wheel), it is understood that in alternative embodiments the steerable wheels 22a, 22b may be actively driven by the controller 30. In still other embodiments, the tool 10 may include more or fewer wheels 22 positioned in different arrangements about the tool 10. In still other embodiments, the wheels 22 may be replaced by other forms of propulsion such as, but not limited to, tracks, omni-wheels, walking legs, and the like.

As shown in FIGS. 2 and 3, the working tool 26 includes a rotating blade mounted for relative rotation about a blade axis 72. More specifically, the blade 26 is mounted to a dedicated blade motor 76 which rotates the blade 26 during use. In the illustrated embodiment, the blade axis 72 is oriented vertically (e.g., parallel to the central axis 58) and positioned proximate the center of the body 18. In some embodiments, the blade axis 72 may be coincident with the central axis 58. While the illustrated working tool 26 is a rotating blade, it is understood that in alternative embodiments the tool 26 may include, but is not limited to, reciprocating blades, a distributor or dispenser of some kind, and the like.

The tool 10 also includes a charging port 80. The charging port 80 is in operable communication with at least the battery 32 of the tool 10 and configured to create a temporary electrical connection with a charging station 84 (described below) to convey the electrical energy output by the charging station 84 to the battery 32 for re-charging operations. More specifically, the charging port 80 includes a channel 88 open to the exterior of the body 18 with at least a pair of electrodes (not shown) positioned therein. During use, the charging port 80 is configured to receive at least a portion of a charging terminal 100 of the charging station 84 (described below) therein and form the desired temporary electrical connection therebetween.

In the illustrated embodiment, the channel 88 is centrally positioned along the front end 34 of the body 18 being substantially aligned with the longitudinal axis 50. As such, the channel 88 is configured to receive the charging terminal 100 in the direction of travel V (see FIG. 3). However, in alternative embodiments different shapes and styles of charging port 80 may be used to allow the charging terminal 100 to interact therewith. In such alternative embodiments, different interactions may include, but are not limited to, different angles of insertion, different forms or layouts of electrodes, and the like.

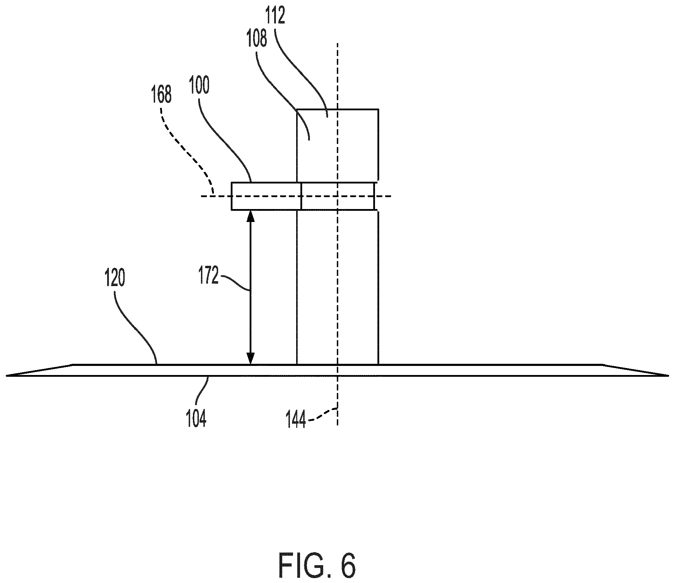

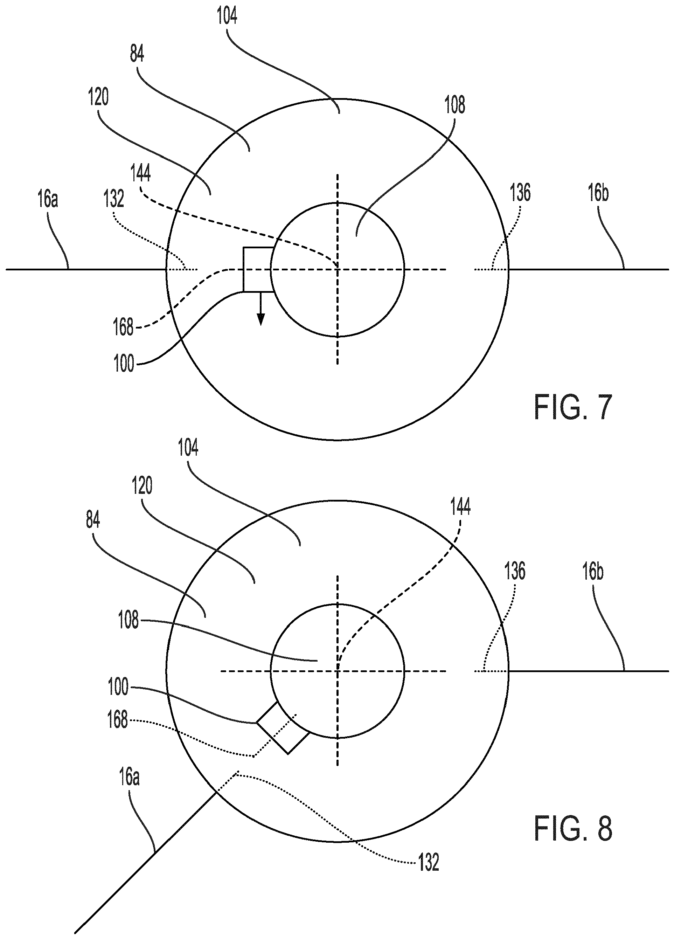

FIGS. 2-8 illustrate a charging station 84 for use with the tool 10. More specifically, the charging station 84 is configured to provide an electrical mounting point to which the charging port 80 of the tool 10 can dock to allow for electrical communication therebetween. The charging station 84 includes a base or pad 104, a hub 108 extending vertically upward from the pad 104 to define a distal end 112, a station controller 116, and a charging terminal 100 mounted to the hub 108 and in electrical communication with the controller 116. During use, the station controller 116 is placed in electrical communication with a power source (not shown) such as a battery or power outlet whereby the controller 116 provides electrical power to the charging terminal 100 to be conveyed to the battery 32 of the tool 10.

The pad 104 of the charging station 84 is a flattened plate or mat having a top surface 120 over which the tool 10 may travel to gain access to the charging terminal 100. More specifically, the illustrated pad 104 has a sufficiently thin profile and tapered periphery to allow the tool 10 to easily and efficiently transition from the support surface 60 and onto the top surface 120.

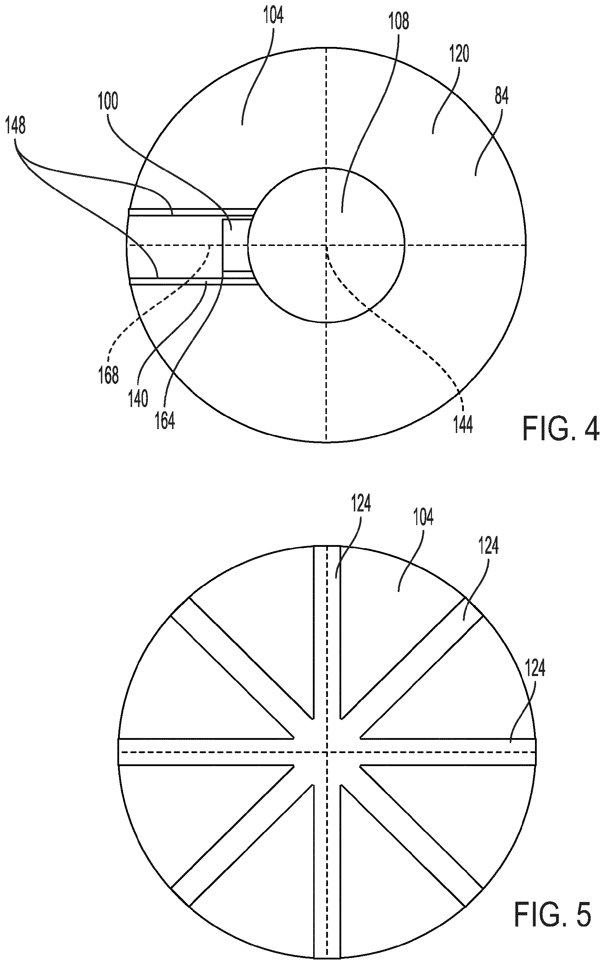

The pad 104 may also include a plurality of channels 124 (see Fig. 5) formed into the underside thereof and configured to allow the user to install the barrier wire 16 therein. More specifically, the channels 124 are open to the periphery of the pad 104 and configured to receive a portion of the boundary wire 16 therein. In the illustrated embodiment, the pad 104 includes a plurality of channels 124, each corresponding with different layouts and positions where the charging station 84 may be installed. For example, channels 124 set 90 degrees from each other may correspond with placing the station 84 at an internal corner of the cutting area 14 (see Position A of Fig. 1), channels 124 set 180 degrees from each other may correspond with placing the station 84 along a straight edge of the cutting area 14 (see Position B of Fig. 1), channels 124 set 45 degrees apart may correspond with placing the station 84 at a wide corner or bend (see Position C of Fig. 1), and the like. During installation, the user selects a position along the boundary wire 16 where they would like to position the station 84 and runs the boundary wire 16 through the channels 124 that best reflect the layout of the boundary in that location. Once the boundary wires 16 are installed, the resulting assembly includes a pad 104 with a first boundary wire portion 16a extending outwardly from the pad periphery at a first location to produce a first boundary axis 132, and a second boundary wire portion 16b extending outwardly from the pad periphery at a second location, different than the first location, to form a second boundary axis 136.

The pad 104 may also include one or more alignment mechanisms 140 formed into the top surface 120 thereof to help assist with aligning the tool 10 with the charging terminal 100. More specifically, the pad 104 may include tracks, walls, grooves, barriers, magnets, and the like to help direct and align the tool 10 so that the charging port 80 of the tool 10 is properly aligned with the charging terminal 100 and/or the hub axis 144 (described below). In the illustrated embodiment, the alignment mechanism 140 includes a pair of parallel tracks 148 formed into the top surface 120 and defining an alignment axis 172. The tracks 148 are configured to help funnel the tool 10 into alignment with the charging terminal 100 as the tool 100 approaches from a pre-determined approach vector V by physically directing the wheels 20 toward the correct location. While the illustrated embodiment includes a single alignment mechanism 140 to accommodate a single approach vector V, it is understood than in other embodiments multiple alignment mechanisms 140 may be present. In still other embodiments, the one or more alignment mechanisms 140 may be movable independent of the pad 104 so that they can be individually adjusted to align with the corresponding approach axes V of any charging terminals present (see FIG. 4).

The hub 108 of the charging station 84 includes an elongated body extending upwardly from the top surface 120 of the pad 104 to define a distal end 112 and a hub axis 144. In the illustrated embodiment, the hub 108 is substantially cylindrical in shape and extends normal to the top surface 120 of the pad 104 (e.g., the hub axis 144 is normal to the top surface 120).

The charging terminal 100 of the charging station 84 is movably coupled to the hub 108 and configured to form a temporary electrical connection with the charging port 80 of the tool 10. The charging terminal 100 includes an elongated body extending radially outwardly from the hub 108 to define a distal end 164 and a docking axis 168. During use, the charging terminal 100 is sized and shaped so that the terminal 100 may be inserted into the charging port 80 of the tool 10, in a direction parallel to the docking axis 168, to produce an electrical connection therebetween. While the illustrated terminal 100 is configured to be inserted into the charging port 80 of the tool 10, it is understood that in alternative embodiments different forms of connection may be used. For example, in some embodiments a portion of the charging port 80 of the tool 10 may be inserted into charging terminal 100, and the like.

The charging terminal 100 of the charting station 84 is movably coupled to the hub 108 for movement with respect thereto to allow the docking axis 168 to be changed relative to the hub 108 and the pad 104. In the illustrated embodiment, the terminal 100 is rotatably coupled to the hub 108 for rotation with respect thereto about the hub axis 144. More specifically, the charging terminal 100 is configured to rotate about the hub axis 144 while maintaining a constant vertical height 172 with respect to the top surface 120 of the pad 104.

While the illustrated charging terminal 100 is configured for axial insertion into a corresponding axial charging hub 80 of the tool 10, it is understood that in alternative embodiments the charging terminal 100 may be configured to alternative forms of connection such as perpendicular insertion. In such embodiments, the charging terminal 100 may be rotated so that the docking axis 168 is positioned perpendicular to the first and second boundary axis 132, 136 instead of parallel as discussed above. In still other embodiments, the charging terminal 100 may be configured to accommodate both axial and perpendicular engagement with the tool 10, in which case the terminal 100 may be rotated into either a parallel or perpendicular orientation relative to the first and second boundary axes 132, 136 depending on which setup is currently being used.

To setup the charging station 84, the user must first select a location along the length of the barrier wire 16 to place the station 84. With a location selected, the user may then route the barrier wires 18 through the channels 124 best corresponding to the layout of the wires 16 at that particular location resulting in a first wire portion 16a extending from the pad 104 to produce a first boundary axis 132 and a second wire portion 16b extending from the pad 104 to produce a second boundary axis 136. As shown in FIG. 1, the two portions 16a, 16b form a single continuous boundary loop.

With the boundary wires 16 in place, the user can then setup the station 84 by rotating the charging terminal 100 relative to the hub 108 and pad 104 until the docking axis 168 is parallel with one of the first boundary axis 132 and the second boundary axis 136. More specifically, the user may align the docking axis 168 with the wire portion 16a, 16b, corresponding to the direction of travel programed into the tool 10. For example, the docking axis 168 may be aligned with the first boundary axis 132 for a tool 10 programmed for clockwise travel or aligned with the second boundary axis 136 for a tool 10 programmed for counterclockwise travel. The illustrated station 84 is aligned with the first boundary axis 132 for clockwise travel.

In instances where a different direction of mowing is desired, the user may subsequently rotate the charging terminal 100 relative to the hub 108 and the pad 104 until the docking axis 168 is parallel with the other of the first boundary axis 132 and the second boundary axis 136 without having to move the

With the charging station 84 installed, the user may then use the station 84 together with the tool 10 to performing grass cutting and/or other robotic garden functions. More specifically, when the tool's battery charge drops below a predetermined level and/or a garden activity is complete, the tool 10 is programmed to travel in a straight path until it reaches a boundary wire 16. Once a boundary wire 16 is detected, the tool 10 will then turn so that the tool 10 is aligned parallel with the wire 16 and begin traveling in a predetermined direction (e.g., turn right to travel clockwise along the barrier 16 or turn left to travel anti-clockwise along the barrier 16). In the illustrated embodiment, the tool 10 is programmed for clockwise travel.

The tool 10 then travels along the barrier wire 16 approaching the station 84 via the first wire segment16a. More specifically, the tool 10 will travel along the length of the first wire portion 16a toward the station 84 such that the vector of approach V is parallel to the first boundary axis 132 and the docking axis 168. The tool 10 then continues to travel along the wire 16, driving onto and across the top surface 120 of the pad 104 and toward the charging terminal 100 to which it is already aligned. By having the charging terminal 100 aligned with the first boundary axis 132, the tool 10 is able to make a straight approach from traveling along the boundary wire 16a, 16b to docking with the charging terminal 100 without making any major turns or maneuvers.

In embodiments where an alignment mechanism 140 is present, the alignment mechanism 140 may further assist with maintaining the alignment between the approach vector V and the docking axis 168 by mechanically funneling the wheels 22 of the tool 10 into the proper position as the tool 10 travels atop the pad 104.

Once atop the pad 104, the tool 10 continues to travel along the approach vector V and toward the charging terminal 100 until the charging terminal 100 enters into and makes an electrical connection with the charging port 80 of the tool 10. The tool 10 may then undergo charging operations.

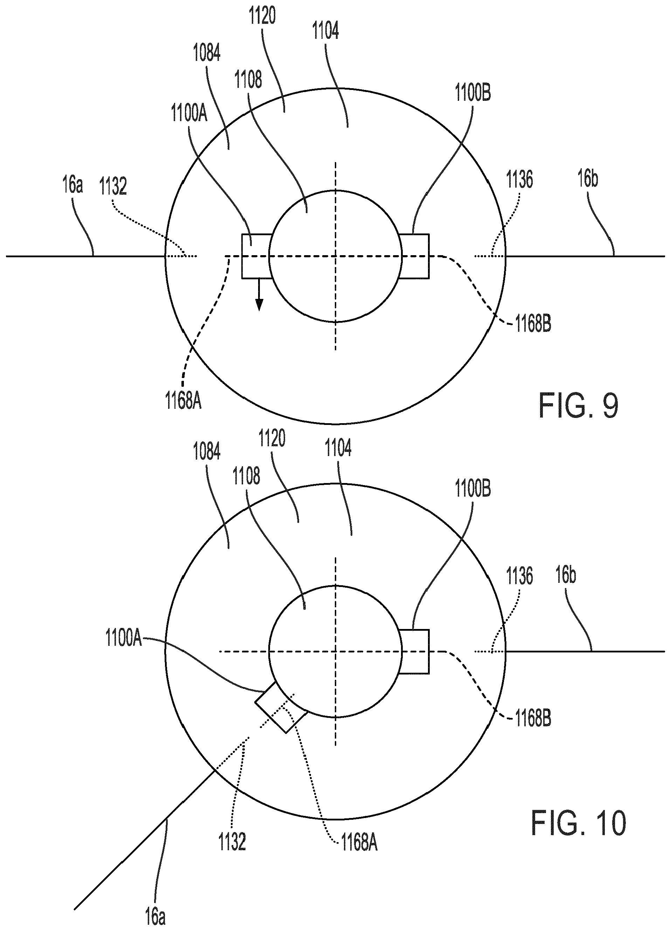

FIGS. 9-10 illustrate another embodiment of the charging station 1084. The charging station 1084 is substantially similar to the charging station 84 so only the differences will be discussed in detail herein. The charging station 1084 includes a first charging terminal 1100A and a second charging terminal 1100B, both of which are movably coupled to the hub 1108 and define a corresponding docking axis 1168A, 1168B. During use, each charging terminal 1100A, 1100B is configured to pivot, independently, relative to the hub axis 144 while maintaining a constant vertical height 1126 relative to the top surface 1120 of the pad 1104. In the illustrated embodiment, both charging terminals 1100A, 1100B are positioned at the same height and sized and shaped to dock with the same docking port 80 of the same tool 10.

During use, the user is able to individual pivot each charging terminal 11 00A, 1100B so that each terminal 1100A, 1100B aligns with a corresponding one of the first and second boundary axis 1132, 1136. As such, the charging station 1084 is able to accommodate a tool 10 that is traveling in both the either the clockwise or anti-clockwise direction without having to adjust the terminal 1100 each time.

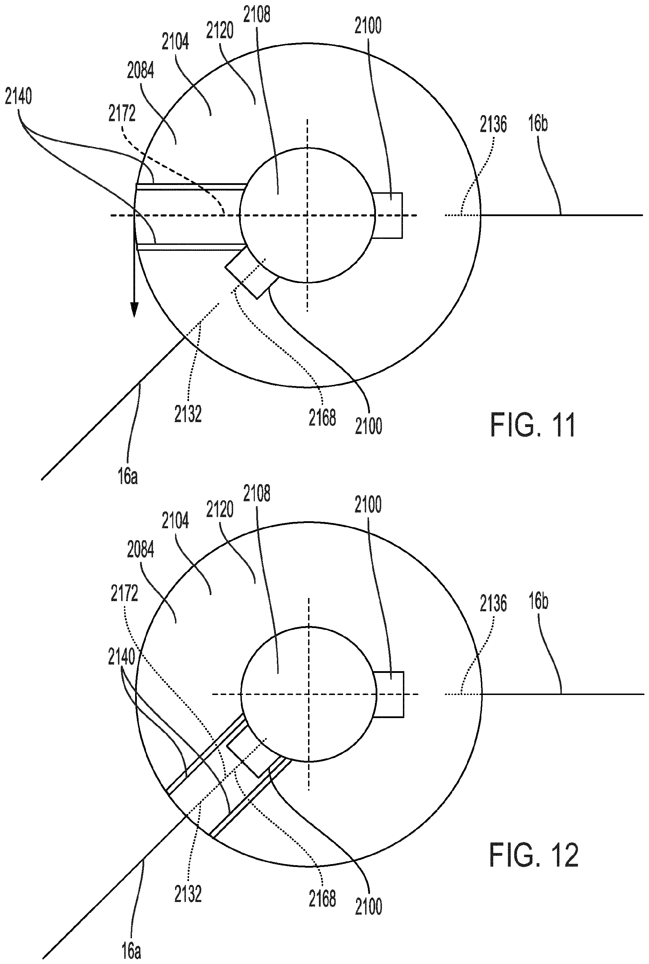

FIGS. 11-12 illustrate another embodiment of the charging station 2084. The charging station 2084 is substantially similar to the charging station 84 so only the differences will be discussed in detail herein. The top surface 2120 of the pad 2104, including the alignment mechanisms 2140 contained thereon, is rotatable relative to the underside of the pad 2104 (e.g., the channels 2124 and also relative to the hub 2108 and charging terminals 2100. As such, the user is able to rotate the top surface 2120 of the pad 2104 to place the alignment axis 2172 of any alignment mechanisms 2140 contained thereon into alignment with a corresponding one of the first boundary axis 2132, 2136 and/or docking axis 2168. Such an embodiment may also include a locking mechanism to secure the top surface 2120 in place once it has been adjusted.

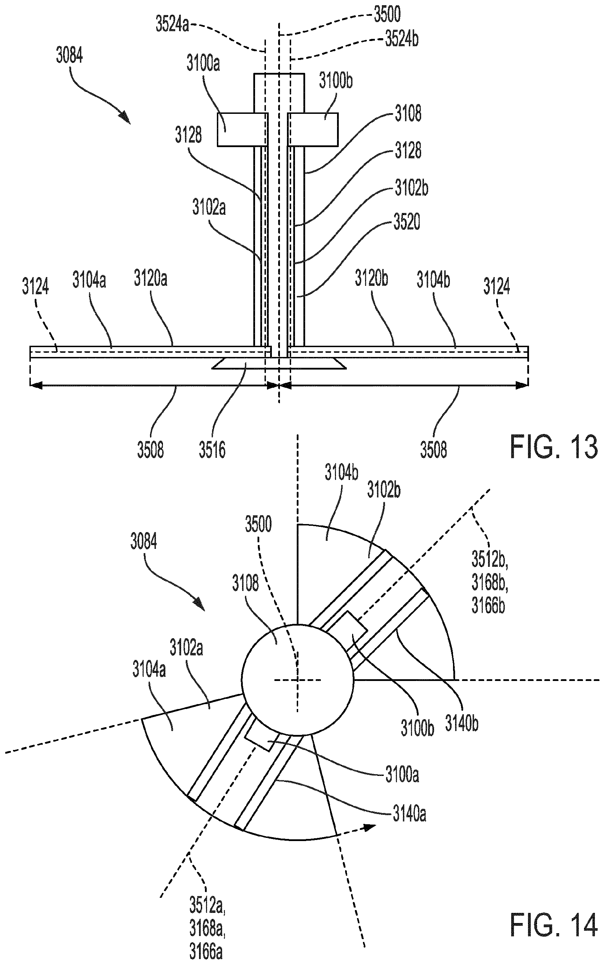

FIGS. 13-15 illustrate another embodiment of the charging station 3084. The charging station 3084 is substantially similar to the charging station 84 so only the differences will be discussed in detail herein. The charging station 3084 includes a hub 3108 defining a hub axis 3500, a plurality of pad portions 3104a, 3104b, and a plurality of charging terminals 3100a, 3100b each associated with a corresponding pad portion 3104a, 3104b to form a docking pair 3102a, 3102b. During use, the elements of each pair 3102a, 3102b are configured to rotate with respect to the hub 3108 as a single unit while maintaining the relative alignment therebetween.

As shown in FIGS. 13 and 14, each pad portion 3104a, 3104b includes a flattened plate or mat having a top surface 3120 forming a "sector" shape originating at the hub axis 3500 and extending radially outwardly therefrom to define a pad portion width 3504 and outer pad diameter 3508. In the illustrated embodiment, each pad portion 3104a, 3104b defines a pad portion width 3504 of 90 degrees. However, in other embodiments, each pad portion 3104a, 3104b may define a pad width 3504 of 45 degrees, 30 degrees, 20 degrees, 15 degrees, and 10 degrees. In still other embodiments, each pad portion 3104a, 3104b may form other shapes including but not limited to a triangular wedge, and the like. Still further, while the illustrated embodiment includes two pad portions 3104a, 3104b each having the same pad portion width 3504 and pad diameter 3508, it is understood that in other embodiments additional pad portions may be present to accommodate additional approach vectors. Furthermore, each pad portion may have a unique shape, pad portion width 3504, and/or pad diameter 3508.

Furthermore, while the illustrated terminal 3084 includes two separate and distinct pad portions 3104a, 3104b, it is understood that in alternative embodiments an interconnecting membrane may be present to extend between adjacent pad portions 3104a, 3104b to produce a complete 360 degrees of pad and top surface 3120. Such intermediate elements may include but are not limited to an expandable element (e.g., a folded accordion element, an elastic member, and the like) or a series of solid leaves that can fold into and out of each other as the pad potions 3104a, 3104b move relative to each other.

Each pad portion 3104a, 3104b, also defines a channel 3124 configured to allow a barrier wire 16 to be installed therein. More specifically, the illustrated channel 3124 extends radially between the hub axis 3500 and the outer pad diameter 3508 whereby a barrier wire 16 positioned therein can extend radially outwardly from the outer pad diameter 3508 to define a corresponding barrier axis 3512a, 3512b. In the illustrated embodiment, each channel 3124 is generally positioned at the middle of a corresponding pad portion 3104a, 3104b, however in alternative embodiments, the channel 3124 may be positioned at different locations within the pad portion 3104a, 3104b as needed.

Each pad portion 3104a, 3104b also includes an alignment mechanism 3140 formed into the top surface 3120 thereof to help assist with aligning the tool 10 with the corresponding charging terminal 3100a, 3100b. The alignment mechanism 3140 for each pad portion 3104a, 3104b, extends radially outwardly from the hub axis 3500 defining a corresponding alignment axis 3166. In the illustrated embodiment, each alignment axis 3166 is aligned with the corresponding barrier axis 3512a, 3512b of the same pad portion 3104a, 3104b.

The hub 3108 of the charging station 3084 includes an elongated body oriented vertically to define the hub axis 3500. More specifically, the hub 3108 includes a base 3516 configured to be placed on the support surface, and the hub body 3520 that extends normal from the base 3516.

As shown in FIGS. 13-15, each charging terminal 3100a, 3100b of the charging station 3084 is movably coupled to the hub 3108 and configured to form a temporary electrical connection with the charging portion 80 of the tool 10 (described above). Each charging terminal 3100a, 3100b includes an elongated body extending radially outwardly from the hub 3108 to define a distal end 3164 and a docking axis 3168a, 3168b. During use, each charging terminal 3100a, 310b is sized and shaped so that the terminal 3100a, 3100b may be inserted into the charging port 80 of the tool 10 in a direction parallel to the docking axis 3168a, 3168b, to produce the necessary electrical connections.

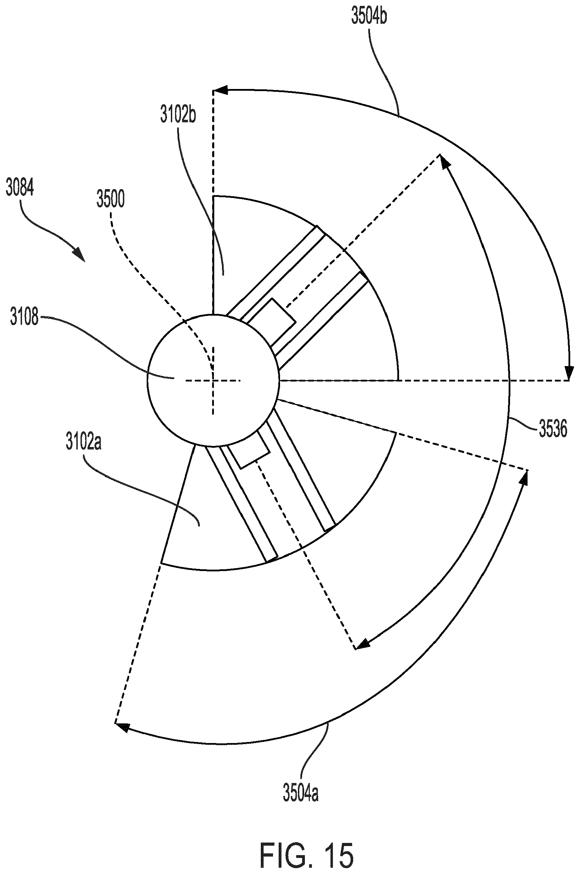

Together, a corresponding charging terminal 3100a, 3100b and pad portion 3104a, 3104b form a docking pair 3102a, 3102b. More specifically, each docking pair 3102a, 3102b is configured to rotate with respect to the hub 3108 about a corresponding axis 3524a, 2524b that is parallel to the hub axis 3500. In other embodiments, some of the pairs 3102a, 3102b may rotate about the hub axis 3500 itself. As shown in FIGS. 14 and 15, each pair 3102a, 3102b is configured so that the corresponding terminal 3100a, 3100b and pad portion 3104a, 3104b rotate together as a unit so that the docking axis 3168a, 3168b, the alignment axis 3166a, 3166b, and the barrier axis 3512a, 1512b all remain aligned over the entirety of the rotational movement.

In the illustrated embodiment, the terminals 3100a, 3100b are interconnected to the pad portions 3104a, 3104b by a vertical shaft 3128 supported by the hub 3108. However, in alternative embodiments other forms of operable communication may be used such as, but not limited to, a gear train, cable and pullies, electrically connected servo motors, and the like.

To setup the charging terminal 3084, the user first threads a first portion 3532a of the barrier wire 16 through the channel 3124 of the first pad portion 3104a to produce a first barrier axis 3512a. The user then threads a second portion 3532b of the barrier wire 16 through the channel 3124 of the second pad portion 3104b to produce a second barrier axis 3512b.

With the barrier wire 16 connected, the user may then rotate each docking pair 3102a, 3102b with respect to the hub 3108, independently, so that the barrier axes 3512a, 3512b correspond and align with the layout of the barrier wire 16 in the immediate vicinity of the charging terminal 3084. When doing so, the user adjusts the relative charging angle 3536 produced between the two barrier axes 3512a, 3512b. In some embodiments, the final charging angle 3536 may be adjusted to any value between 90 degrees and 180 degrees. In other embodiments, the final charging angle 3536 may be adjusted to any value between 45 degrees and 180 degrees. In still other embodiments, the final charging angle 3536 may be any angle less than or equal to 180 degrees. To adjust a particular docking pair 3102a, 3102b the user generally rotates the desired pad portion 3104a, 3104b relative to the hub 3108 - causing the corresponding terminal 3100a, 3100b to rotate at the same time.

Once each of the docking pairs 3102a, 3102b are in place, the user may then begin operation of the tool 10 itself whereby the tool 10 may approach the docking terminal 3084 along any barrier axis 3512a, 3512b, drive up and onto the top surface 3120a, 3120b of the corresponding pad portion 3104a, 3104b, and dock with the corresponding terminal 3100a, 3100b which is already aligned therewith.

## Claims

1. A charging station for use with a robotic garden tool having a charging port, the charging station comprising:
a pad having a top surface;
a hub extending from the top surface to produce a distal end;
a charging terminal configured to form a temporary electrical connection with the charging port of the robotic garden tool, wherein the charging terminal is adjustable relative to the pad.

2. The charging station of claim 1, wherein the charging terminal defines a docking axis, wherein the charging terminal is configured to engage the charging port in a direction parallel to the docking axis, and wherein the docking axis is adjustable relative to the pad.

3. The charging station of claim 2, wherein the hub defines a hub axis, and wherein the docking axis extends radially from the hub axis.

4. The charging station of claim 3, wherein the hub axis is normal to the top surface.

5. The charging station of claim 1, wherein the top surface of the pad includes an alignment mechanism configured to align the robotic power tool relative to the charging terminal.

6. The charging station of claim 5, wherein the alignment mechanism includes a pair of tracks formed into the top surface of the pad.

7. The charging station of claim 1, wherein the charging terminal is a first charging terminal, the charging station further comprising a second charging terminal configured to form a temporary electrical connection with the robotic garden tool.

8. The charging station of claim 7, wherein the first charging terminal and the second charging terminal are both independently adjustable relative to the pad.

9. The charging station of claim 1, wherein the charging terminal maintains a constant distance from the top surface of the pad when being adjusted relative thereto.

10. A method of setting-up a charging station for use with a robotic garden tool having a docking port, wherein the charging station includes a pad, a hub extending from the pad, and a charging terminal adjustably mounted to the hub, where the charging terminal defines a docking axis, the method comprising:
coupling a first boundary wire portion to the pad to define a first boundary axis;
coupling a second boundary wire portion to the pad to define a second boundary axis;
adjusting the charging terminal relative to the pad to align the docking axis with one of the first boundary axis and the second boundary axis.

11. The method of claim 10, wherein the hub defines a hub axis, and wherein the charging axis extends radially from the hub axis.

12. The method of claim 10, wherein adjusting the charging terminal includes adjusting the charging terminal so that the charging terminal maintains a constant distance from the pad.

13. The method of claim 10, wherein the pad includes an alignment mechanism defining an alignment axis, the method further comprising adjusting the pad to align the alignment axis with the docking axis.

14. The method of claim 13, wherein the alignment mechanism includes a pair of parallel tracks formed into the pad.

15. The method of claim 10, wherein the pad includes a plurality of channels formed therein, and wherein coupling the first boundary wire portion to the pad includes positioning at least a portion of the first boundary wire portion in a corresponding channel.

16. The method of claim 10, further comprising docking the robotic garden tool to the charging terminal.

17. The method of claim 16, wherein docking the robotic garden tool includes introducing the charging terminal to the charging port along the docking axis.

18. A charging station for use with a robotic garden tool having a charging port, the charging station comprising:
a pad having a top surface having an alignment mechanism thereon, wherein the alignment mechanism defines an alignment axis, the pad also defining a plurality of channels, each sized to receive at least a portion of a barrier wire therein;
a hub extending from the top surface to produce a distal end;
a charging terminal configured to form a temporary electrical connection with the charging port of the robotic garden tool, wherein the charging terminal defines a docking axis;
wherein the top surface of the pad is adjustable relative to the charging terminal to align the alignment axis with the docking axis.

19. The charging station of claim 18, wherein the alignment axis is adjustable relative to the channels.

20. The charging station of claim 19, wherein the charging terminal is adjustable relative to the channels.
